# EUROPEAN PATENT SPECIFICATION

(11) **EP 0 977 367 B1**
(45) Date of publication and mention of the grant of the patent: **19.10.2005**
(21) Application number: 99108072.2
(22) Date of filing: 23.04.1999
(51) Int. Cl.: H04B 1/38, H01Q 1/24

(54) **Portable telephone and method for automatically switching an antenna mode thereof**
Mobilfunktelefon mit automatischer Antennenschaltung
Téléphone portable avec commutation automatique d'antennes

(30) Priority: 28.07.1998 KR 9830330
(43) Date of publication of application: 02.02.2000
(73) Proprietor: SAMSUNG ELECTRONICS CO., LTD., Suwon-City, Kyungki-do (KR)
(72) Inventor: Kim, Jong-Myung, Kumi-shi, Kyongsangbuk-do (KR)
(74) Representative: Grünecker, Kinkeldey, Stockmair & Schwanhäusser Anwaltssozietät

(56) References cited:
- EP-A- 0 800 227
- US-A- 5 497 506

## Description

The present invention relates to a portable telephone with an extendible antenna and to a method for automatically switching an antenna mode of said portable telephone.

In general, a portable telephone employs an extendible antenna which can be extended from the top of the telephone. In the portable telephone adopting the extendible antenna, the antenna is extended (or stretched out) in an external antenna mode, and retracted (or unstretched) in an internal antenna mode. The portable telephone is switched to the internal or external antenna mode according to whether the antenna is extended or retracted.

An antenna mode switching technique is divided into a manual antenna mode switching technique and an automatic antenna mode switching technique depending upon the way of extending and retracting the antenna. In the manual antenna mode switching, a user of the portable telephone extends and retracts the antenna by hand. That is, the user extends the antenna by hand, when the reception sensitivity is poor during the call. This method is inconvenient in that the user should manually extend and retract the antenna. Further, a problem may arise when the user touches the antenna by hand to extent the antenna in the case where a received signal strength is poor, because this may lead to noises. At the worst, the call may be disconnected.

In the automatic antenna mode switching, the antenna is automatically extended when the user initiates the call and automatically retracts the antenna when the user terminates the call. In this case, the antenna is extended and retracted by an antenna moving mechanism using a motor. However, in this automatic antenna mode switching technique, the antenna is automatically extended when the call is initiated, regardless of the users intention. That is, the antenna is extended even when the received signal strength is good. As indicated above, the antenna is unconditionally extended when the call is initiated, so that the extended antenna may annoy the user or may be damaged due to carelessness of the user.

EP-0 800 227 describes an antenna control device for a mobile phone which automatically expands the antenna when a call is received. One of the options disclosed is that the antenna is only expanded when the measured electric field intensity falls below a threshold value.

It is therefore the object of the present invention to provide an improved method for automatically switching an antenna mode, and a corresponding portable telephone.

This object is solved by the subject matters of the independent claims.

The invention is advantageous in that it is suitable for preventing the unnecessary extension of the antenna which could lead to damage of the antenna.

Preferred embodiments are defined in the dependent claims.

The invention will become more apparent from the following detailed description when taken in conjunction with the accompanying drawings in which:
FIG. 1 is a block diagram of a portable telephone to which the present invention is applied; and
FIG. 2 is a flow chart illustrating a method of automatically switching an antenna mode according to an embodiment of the present invention.

Reference will now be made in detail to the preferred embodiment of the present invention. In the following description, specific details such as processing flow have been set forth to provide a more thorough understanding of the present invention. It will be apparent, however, to one skilled in the art that the present invention may not be limited to these specific details. A description of known functions and constructions unnecessarily obscuring the subject matter of the present invention have been omitted for clarity.

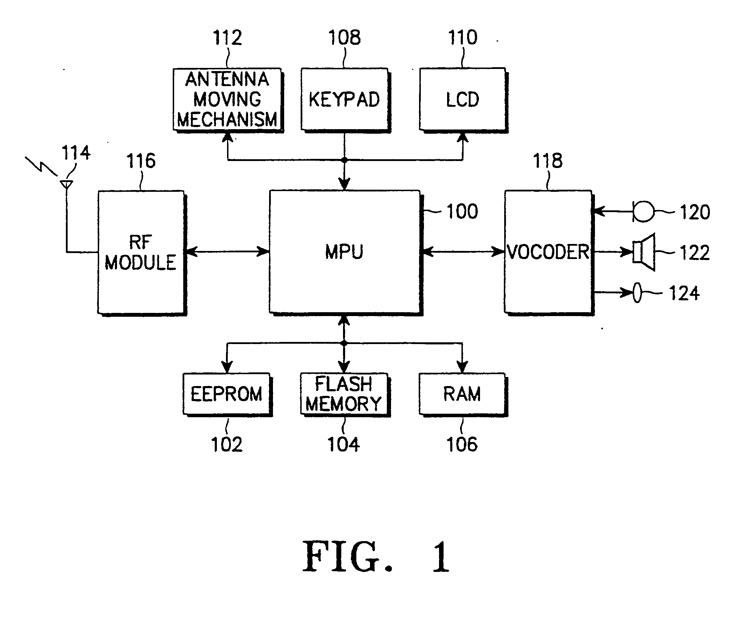

FIG. 1 is a block diagram of a portable telephone to which the present invention is applied. In FIG. 1, an MPU (Microprocessor Unit) 100 processes and controls a telephone call or a data communication. An EEPROM (Electrically Erasable and Programmable Read Only Memory) 102 stores reference data for the MPU 100, and a flash memory 104 stores a program for the MPU 100. A RAM (Random Access Memory) 106 is provided as a working memory for the MPU 100. A keypad 108 having numeric keys and function keys provides a key input by the user to the MPU 100. An LCD (Liquid Crystal Display) 110 displays various information under the control of the MPU 100. An antenna moving mechanism 112 extends and retracts the antenna under the control of the MPU 100, as described above. Such an antenna moving mechanism 112 is disclosed in the U.S. 5,497,506.

An RF (Radio Frequency) module 116 converts a signal received from the MPU 100 to an RF signal and radiates it via an antenna 114. Further, the RF module 116 demodulates the RF signal received via the antenna 114 and outputs it to the MPU 100. A vocoder 118 connected to the MPU 100 is connected to a microphone 120 which is a voice input device, to a speaker 122 which is a voice output device and to a vibrator 124 for vibrating the portable telephone to notify receipt of an incoming call. The vocoder 118 encodes a voice signal received from the microphone 120 to output voice data to the MPU 100, decodes the voice data received from the MPU 100 to output a voice signal via the speaker 122 and activates the vibrator 124.

A function of automatically switching an antenna mode according to the received signal strength in the portable telephone will be referred to as an "antenna switching control function" in the following description. Preferably, the received signal strength is determined using the received signal strength indicator (RSSI) value. The antenna switching control function of the present invention can be set or released by selecting a menu through the keypad 108. Setting information of the antenna switching control function is stored at the EEPROM 102 like the setting information for general functions.

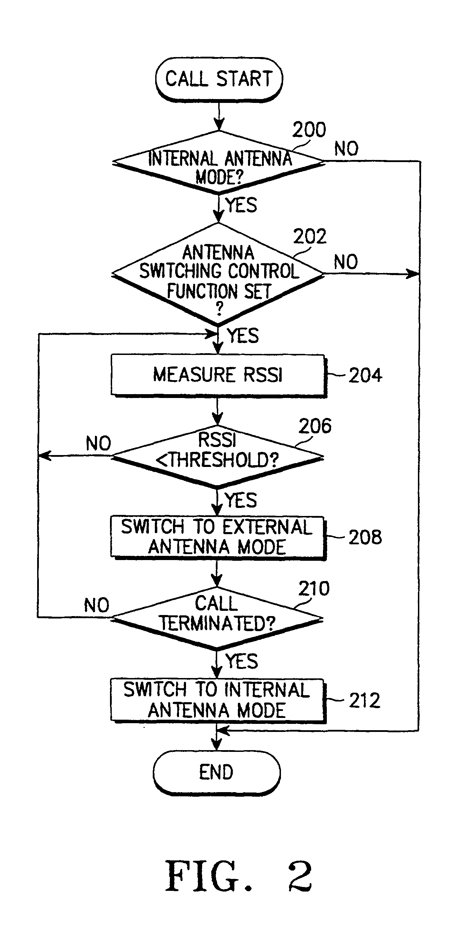

FIG. 2 is a flow chart illustrating a method of automatically switching an antenna mode according to the present invention. If the user starts an incoming call or an outgoing call by using the portable telephone of FIG. 1, the MPU 100 determines in step 200 whether the portable telephone is in an internal antenna mode where the antenna 114 is retracted. If it is determined that the portable telephone is in an external antenna mode where the antenna 114 is extended, the MPU 100 completes the procedure and provides a general incoming or outgoing call service. On the contrary, if it is determined that the portable telephone is in the internal antenna mode, the MPU 100 checks the EEPROM 102 in step 202 to determine if the antenna switching control function has been set by the user.

If it is checked in step 202 that the antenna switching control function has not been set, the MPU 10 completes the procedure and provides the general incoming or outgoing call service. On the contrary, if it is checked that the antenna switching control function has been set, the MPU 100 measures the RSSI value in step 204 and compares the RSSI value with a threshold value in step 206. Typically, the RSSI value is measured from the signal received from a base station through the RF module 116. The threshold value is preset by a manufacturer to a specified level where it is necessary to extend the antenna 114.

In steps 204 and 206, the MPU 100 continuously checks if the RSSI value is lower than the threshold value. When it is checked that the RSSI value is lower than the threshold value, the MPU 100 switches the antenna mode to the external antenna mode in step 208. That is, the MPU 100 extends the antenna 114 to the exterior of the telephone by using the antenna moving mechanism 112, to switch the antenna mode to the external antenna mode. In step 210, the MPU 100 checks if the call is terminated, and if not, returns to step 204.

If it is checked in step 210 that the call is terminated, the MPU 100 switches the antenna mode to the internal antenna mode in step 212 and then completes the procedure. That is, the MPU 100 retracts the antenna 114 to the interior of the telephone by using the antenna moving mechanism 112, to switch the antenna mode to the internal antenna mode.

Hence, the present invention can prevent an unnecessary extension of the antenna in the automatic antenna mode switching. That is, when a user has set an antenna switching control function, the antenna is automatically extended only when the RSSI value is poor, thus preventing unnecessary extension.

While there has been illustrated an example of setting the antenna switching control function only when the user wants to do, it is also possible to unconditionally set the antenna switching control function regardless of the users intention.

## Claims

1. The method for automatically switching an antenna mode in a portable telephone having an extendible antenna (114), the method comprising the steps of:
measuring (204) the received signal strength during a call in an internal antenna mode where the antenna is retracted;
comparing (206) the measured signal strength with a threshold value; and
switching (208) the antenna mode to an external antenna mode by extending the antenna when the measured signal strength is lower than the threshold value,
wherein the step of measuring the received signal strength comprises a step of receiving and evaluating a received signal strength indication, RSSI, value.

2. The method according to claim 1, wherein the received signal strength is measured when said call is commenced, and continues to be measured throughout the call until the measured signal strength is determined to be below said threshold value.

3. The method according to claim 1 or 2, further comprising the step of switching (212) the antenna mode to the internal antenna mode by retracting the antenna when the call is terminated.

4. The method according to one of claims 1 to 3, further comprising the step of determining (202) whether an antenna switching control function is set by a user, wherein the step of switching the antenna mode to the external antenna mode is performed only if the antenna switching control function is set.

5. Portable telephone comprising:
an extendible antenna (114);
means (112) for extending the antenna to switch the antenna mode to an external antenna mode;
means (100) for measuring the received signal strength during a call in an internal antenna mode where the antenna is retracted; and
control means (100) for comparing the measured signal strength with a threshold value and for controlling said means for extending the antenna to extend the antenna when the measured signal strength is lower than the threshold value,
wherein the means for measuring the received signal strength comprises means for receiving and evaluating a received signal strength indication, RSSI, value.

6. The portable telephone according to claim 5, wherein said measuring means (100) is adapted to measure the received signal strength when said call is commenced, and to continue measuring the received signal strength throughout the call until the measured signal strength is determined by said control means (100) to be below said threshold value.

7. The portable telephone according to claim 5 or 6, further comprising means (112) for retracting the antenna to switch the antenna mode to the internal antenna mode when the call is terminated.

8. The portable telephone according to one of claims 5 to 7, further comprising a memory (102) for storing data set by a user, the data indicating whether an antenna switching control function is set, wherein said control means controls said means for extending the antenna only when the antenna switching control function is set.

## Patentansprüche

1. Verfahren zum automatischen Umschalten einer Antennenbetriebsart in einem tragbaren Telefon mit einer ausfahrbaren Antenne (114), wobei das Verfahren die folgenden Schritte umfasst:
Messen (204) der Stärke des empfangenen Signals während eines Gesprächs in einer internen Antennenbetriebsart, in der die Antenne eingezogen ist;
Vergleichen (206) der gemessenen Signalstärke mit einem Schwellenwert; und
Umschalten (208) der Antennenbetriebsart auf eine externe Antennenbetriebsart, indem die Antenne ausgefahren wird, wenn die gemessene Signalstärke niedriger ist als der Schwellenwert,
wobei der Schritt des Messens der Stärke des empfangenen Signals einen Schritt des Empfangens und Bewertens eines Wertes der Empfangsfeldstärkeanzeige (received signal strength indication - RSSI) umfasst.

2. Verfahren nach Anspruch 1, wobei die Stärke des empfangenen Signals gemessen wird, wenn das Gespräch begonnen wird, und während des gesamten Gesprächs weiter gemessen wird, bis festgestellt wird, dass die gemessene Signalstärke unter dem Schwellenwert liegt.

3. Verfahren nach Anspruch 1 oder 2, das des Weiteren den Schritt des Umschaltens (212) der Antennenbetriebsart auf die interne Antennenbetriebsart umfasst, indem die Antenne eingezogen wird, wenn das Gespräch beendet wird.

4. Verfahren nach einem der Ansprüche 1 bis 3, das des Weiteren den Schritt des Feststellens (202), ob eine Antennenumschalt-Steuerfunktion von einem Benutzer eingestellt ist, umfasst, wobei der Schritt des Umschaltens der Antennenbetriebsart auf die externe Antennenbetriebsart nur durchgeführt wird, wenn die Antennenumschalt-Steuerfunktion eingestellt ist.

5. Tragbares Telefon, das umfasst:
eine ausfahrbare Antenne (114);
eine Einrichtung (112), die die Antenne ausfährt, um die Antennenbetriebsart auf eine externe Antennenbetriebsart umzuschalten;
eine Einrichtung (100), die die Stärke des empfangenen Signals während eines Gesprächs in einer internen Antennenbetriebsart misst, in der die Antenne eingezogen ist; und
eine Steuereinrichtung (100), die die gemessene Signalstärke mit einem Schwellenwert vergleicht und die Einrichtung zum Ausfahren der Antenne so steuert, dass sie die Antenne ausfährt, wenn die gemessene Signalstärke niedriger ist als der Schwellenwert,
wobei die Einrichtung, die die Stärke des empfangenen Signals misst, eine Einrichtung zum Empfangen und Bewerten eines Wertes der Empfangsfeldstärkeanzeige (RSSI) umfasst.

6. Tragbares Telefon nach Anspruch 5, wobei die Messeinrichtung (100) so eingerichtet ist, dass sie die Stärke des empfangenen Signals misst, wenn das Gespräch begonnen wird, und die Stärke des empfangenen Signals während des gesamten Gesprächs weiter misst, bis durch die Steuereinrichtung (100) festgestellt wird, dass die gemessenen Signalstärke unter dem Schwellenwert liegt.

7. Tragbares Telefon nach Anspruch 5 oder 6, das des Weiteren eine Einrichtung (112) umfasst, die die Antenne einzieht, um die Antennenbetriebsart auf die interne Betriebsart umzuschalten, wenn das Gespräch beendet wird.

8. Tragbares Telefon nach einem der Ansprüche 5 bis 7, das des Weiteren einen Speicher (102) zum Speichern von durch einen Benutzer eingestellten Daten umfasst, wobei die Daten anzeigen, ob eine Antennenumschalt-Steuerfunktion eingestellt ist, und wobei die Steuereinrichtung die Einrichtung zum Ausfahren der Antenne nur steuert, wenn die Antennenumschalt-Steuerfunktion eingestellt ist.

## Revendications

1. Procédé pour la commutation automatique d'un mode d'antenne dans un téléphone portable ayant une antenne extensible (114), le procédé comprenant les étapes qui consistent :
à mesurer (204) le niveau du signal reçu pendant un appel dans un mode d'antenne interne dans lequel l'antenne est rétractée ;
à comparer (206) le niveau de signal mesuré à une valeur de seuil ; et
à commuter (208) le mode d'antenne sur un mode d'antenne extérieure en provoquant une extension de l'antenne lorsque le niveau de signal mesuré est inférieur à la valeur de seuil,
dans lequel l'étape de mesure du niveau de signal reçu comprend une étape consistant à recevoir et évaluer une valeur d'indication de niveau de signal reçu, RSSI.

2. Procédé selon la revendication 1, dans lequel le niveau de signal reçu est mesuré lorsque ledit appel est commencé, et continu d'être mesuré pendant tout l'appel jusqu'à ce que le niveau de signal mesuré soit déterminé comme étant inférieur à ladite valeur de seuil.

3. Procédé selon la revendication 1 ou 2, comprenant en outre l'étape consistant à commuter (212) le mode d'antenne sur le mode d'antenne intérieure en rétractant l'antenne lorsque l'appel est terminé.

4. Procédé selon l'une des revendications 1 à 3, comprenant en outre l'étape consistant à déterminer (202) si la fonction de commande de commutation d'antenne est définie par un utilisateur, dans lequel l'étape de commutation du mode d'antenne sur le mode d'antenne extérieure est exécutée uniquement si la fonction de commande de commutation d'antenne est définie.

5. Téléphone portable comportant :
une antenne extensible (114) ;
un moyen (112) destiné à provoquer l'extension de l'antenne pour commuter le mode d'antenne sur un mode d'antenne extérieure ;
un moyen (100) destiné à mesurer le niveau de signal reçu pendant un appel dans un mode d'antenne intérieure lorsque l'antenne est rétractée ; et
un moyen de commande (100) destiné à comparer le niveau de signal mesuré à une valeur de seuil et à commander ledit moyen destiné à provoquer l'extension de l'antenne pour provoquer l'extension de l'antenne lorsque le niveau de signal mesuré est inférieur à la valeur de seuil,
dans lequel le moyen destiné à mesurer le niveau de signal reçu comprend un moyen destiné à recevoir et évaluer une valeur d'indication de niveau de signal reçu, RSSI.

6. Téléphone portable selon la revendication 5, dans lequel ledit moyen de mesure (100) est conçu pour mesurer le niveau de signal reçu lorsque ledit appel est commencé, et pour continuer de mesurer le niveau de signal reçu pendant tout l'appel jusqu'à ce que le niveau de signal mesuré soit déterminé par ledit moyen de commande (100) comme étant inférieur à ladite valeur de seuil.

7. Téléphone portable selon la revendication 5 ou 6, comportant en outre un moyen (112) destiné à rétracter l'antenne pour commuter le mode d'antenne sur le mode d'antenne intérieure lorsque l'appel est terminé.

8. Téléphone portable selon l'une des revendications 5 à 7, comportant en outre une mémoire (102) destinée à stocker des données définies par un utilisateur, les données indiquant si une fonction de commande de commutation d'antenne est définie, dans lequel ledit moyen de commande commande ledit moyen destiné à provoquer une extension de l'antenne uniquement lorsque la fonction de commande de commutation d'antenne est définie.
